# EUROPEAN PATENT SPECIFICATION

(11) **EP 4 150 937 B1**
(45) Date of publication and mention of the grant of the patent: **27.08.2025**
(21) Application number: 21727935.5
(22) Date of filing: 14.05.2021
(51) Int. Cl.: H04W 4/021, H04W 8/18, H04W 12/08, H04W 12/63

(54) **SUBSCRIPTION BASED SERVICE RESTRICTION**
DIENSTBESCHRÄNKUNG AUF ABONNEMENTBASIS
RESTRICTION DE SERVICE BASÉE SUR ABONNEMENT

(30) Priority: 15.05.2020 US 202063025450 P
(43) Date of publication of application: 22.03.2023
(73) Proprietor: Telefonaktiebolaget LM Ericsson (publ), 164 83 Stockholm (SE)
(72) Inventor: HEDMAN, Peter, 252 50 Helsingborg (SE); WASS, Mikael, 511 69 Sätila (SE); JOHANSSON, Kaj, 417 64 Göteborg (SE); CHEN, Qian, 431 49 Mölndal (SE)
(74) Representative: Koitel, Raivo
(86) International application number: PCT/IB2021/054174
(87) International publication number: WO 2021/229542

(56) References cited:
- SA2: "Reply LS on service area restriction for CIoT 5GS optimization", vol. SA WG2, no. Online Meeting ;20200420 - 20200424, 10 April 2020 (2020-04-10), XP051874446, Retrieved from the Internet <URL:https://ftp.3gpp.org/tsg_sa/WG2_Arch/TSGS2_138e_Electronic/Docs/S2-2002934.zip S2-2002934 LS on service area restriction for CIoT 5GS optimization.doc> [retrieved on 20200410]
- ERICSSON ET AL: "Service Area Restriction clarification", vol. SA WG2, no. Online Meeting ;20200420 - 20200424, 22 April 2020 (2020-04-22), XP051877284, Retrieved from the Internet <URL:https://ftp.3gpp.org/tsg_sa/WG2_Arch/TSGS2_138e_Electronic/Revision_Deadline/S2-2002773r03.zip S2-2002773_23.501_Service Area Restriction1_r03.docx> [retrieved on 20200422]

## Description

### FIELD

The present disclosure relates to wireless communications, and in particular, to subscription based service restriction.

### BACKGROUND

The concept of "Service Area Restriction", as part of the Mobility Restriction, has been present in Third Generation Partnership Project (3GPP) standards since Release 15 (Rel-15). However, there are some details about the Service Area Restriction that are unclear.

Document 3GPP LS S2-2002934 represents a reply on service area restriction for CIoT 5GS optimization. The question is whether the UE using CP CIoT or UP CIoT optimization is allowed to send or receive data in a non-allowed area, including exception data. The answer is that, based on policy, the network may send downlink control plane data to a UE that is in CM-CONNECTED state and is in a non-allowed area. Various restrictions and exceptions apply to a UE in a non-allowed area.

### SUMMARY

According to the present disclosure, methods, a wireless device, a network node and a computer readable storage medium according to the independent claims are provided. Developments are set forth in the dependent claims.

Some embodiments advantageously provide methods, systems, and apparatuses for subscription based service restriction.

In one embodiment, a network node is configured to provide support for at least one service for a wireless device (WD) in a non-allowed area based at least in part on at least one of subscription data associated with the WD and operator policy.

In one embodiment, a wireless device (WD) is configured to operate in a non-allowed area using at least one service that is allowed in the non-allowed area based at least in part on at least one of subscription data and operator policy.

In one claimed aspect of the present disclosure, a method implemented in a wireless device, WD, is provided. The method includes determining that the WD is service area restricted when the WD is in an area defined as a non-allowed area according to subscription data associated with the WD; and operating in the non-allowed area using at least one service that is service area restricted in the non-allowed area based at least in part on at least one of the subscription data associated with the WD and an operator policy.

In some embodiments, the at least one service is not a regulatory prioritized service. In some embodiments, the at least one service includes at least one of a short message service, SMS, over non-access stratum, a location service and an exception reporting service. In some claimed embodiments, the method further includes obtaining information indicating whether the at least one service is allowed for the WD in the non-allowed area. In some embodiments, the information is comprised in at least one of a Nudm_SubscriberDataManagement service message and a Namf_Communication_UEContextTransfer service message.

In some embodiments, the information is included in a registration area field, the registration area field indicating whether the at least one service is allowed for the WD in the non-allowed area. In some embodiments, the information is included in a service area restriction field, the service area restriction field indicating whether the at least one service is allowed for the WD in the non-allowed area. In some embodiments, the non-allowed area is a service area in which the WD is not allowed to initiate a service request, a control plane service request and/or a session management, SM, signalling to obtain user services from a network associated with the network node. In some embodiments, operating in the non-allowed area using the at least one service when the at least one of the subscription data and the operator policy indicates that the at least one service is allowed in the non-allowed area; otherwise, operating in the non-allowed area without using the at least one service.

According to another claimed aspect of the present disclosure, a method implemented in a network node is provided. The method includes determining that a wireless device, WD, is service area restricted when the WD is in an area defined as a non-allowed area based on subscription data associated with the WD; and providing support for the WD for at least one service that is service area restricted in the non-allowed area based at least in part on at least one of the subscription data associated with the WD and an operator policy.

In some claimed embodiments, providing the support further comprises obtaining and/or sending a message indicating that the at least one service that is service area restricted is allowed for the WD in the non-allowed area. In some embodiments, the at least one service is not a regulatory prioritized service. In some embodiments, the at least one service includes at least one of a short message service, SMS, over non-access stratum, a location service and an exception reporting service. In some embodiments, the message is a Namf_Communication_UEContextTransfer service message. In some embodiments, the message includes a registration area field, the registration area field indicating whether the at least one service is allowed for the WD in the non-allowed area.

In some embodiments, the message is a Nudm_SubscriberDataManagement service message. In some embodiments, the message includes a service area restriction field, the service area restriction field indicating whether the at least one service is allowed for the WD in the non-allowed area. In some embodiments, the network node is one of an access and mobility function, AMF, node and a unified data management, UDM, node. In some embodiments, the non-allowed area is a service area in which the WD is not allowed to initiate a service request, a control plane service request and/or a session management, SM, signalling to obtain user services from a network associated with the network node. In some embodiments, providing support for the WD for the at least one service in the non-allowed area when the at least one of the subscription data and the operator policy indicates that the at least one service is allowed in the non-allowed area; otherwise, restricting the WD from using the at least one service in the non-allowed area.

According to yet another aspect, a wireless device, WD, configured to communicate with a network node is provided. The WD comprises processing circuitry configured to cause the WD to perform any one or more of the WD methods above.

According to yet another aspect, a network node is provided. The network node comprises processing circuitry configured to cause the network node to perform any one or more of the network node methods above.

According to yet another aspect, a computer readable storage medium is provided. The computer readable storage medium comprises computer instructions executable by at least one processor to perform any one or more of the WD methods above.

According to yet another aspect, a computer readable storage medium is provided. The computer readable storage medium comprises computer instructions executable by at least one processor to perform any one or more of the network node methods above.

According to yet another aspect, a system comprising processing circuitry is provided. The processing circuitry is configured to cause the system to determine that a wireless device, WD, is service area restricted when the WD is in an area defined as a non-allowed area according to subscription data associated with the WD; provide support for the WD for at least one service that is service area restricted in the non-allowed area based at least in part on at least one of the subscription data associated with the WD and an operator policy; and as a result of the support, allow the WD to operate in the non-allowed area using the at least one service.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a schematic diagram of an example network architecture illustrating a communication system according to the principles in the present disclosure;
FIG. 2 is a block diagram of a network node in communication with a wireless device over an at least partially wireless connection according to some embodiments of the present disclosure;
FIG. 3 is a flowchart of an example process in a network node for subscription based service restriction according to some embodiments of the present disclosure;
FIG. 4 is a flowchart of an example process in a wireless device for subscription based service restriction according to some embodiments of the present disclosure;
FIG. 5 is a flowchart of another example process in a network node for subscription based service restriction according to some embodiments of the present disclosure; and
FIG. 6 is a flowchart of another example process in a wireless device for subscription based service restriction according to some embodiments of the present disclosure.

### DETAILED DESCRIPTION

As discussed above, the concept of "Service Area Restriction", as part of the Mobility Restriction, has been present in 3GPP wireless communication standards since Rel-15. However, there are some details that are not clear. For example, it is not clear what services may be allowed and what services may not be allowed in an area (so called "Non-Allowed Area"), especially for the services carried out via the signaling such as, e.g., short message service (SMS) and Location service (LS).

The 3GPP has also defined that a wireless device (WD), such as a user equipment (UE), may send "Exception Reporting/Data" even in cases where a certain data rate limit is reached. However, it is not clear if such "Exception Reporting/data" is to be allowed or not in a Non-Allowed Area.

Some embodiments propose to introduce control parameters in the subscription data for the services related to, for example, SMS, Location Service and Exception data reporting.

Some advantages of proposed embodiments include providing a per WD/UE level control, and providing an arrangement that works well with the local serving network policy control. Some embodiments provide a solution with backwards compatibility.

Before describing in detail example embodiments, it is noted that the embodiments reside primarily in combinations of apparatus components and processing steps related to subscription based service restriction. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, integrated access and backhaul (IAB), donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB, relay node, access point, radio access point, Remote Radio Unit (RRU) Remote Radio Head (RRH).

Some embodiments provide arrangements in which a service that is "service area restricted" may be allowed on a per WD/subscription or operator policy basis; which may be distinguished from services like emergency services and other regulatory prioritized services that can be used by the WD 22 in non-allowed areas. In other words, some embodiments provide arrangements for one or more specific services that are "service area restricted" generally but can nevertheless override the restriction and be used in the non-allowed area if so indicated in the subscription information for the particular WD and/or per operator policy, as opposed to a regulatory requirement.

In some embodiments, the "support" to be provided to a WD for at least one service, as described herein may be considered support from a network, such as a core network from one or more core network nodes, such as AMF, UDM, SMF, etc.

In some embodiments, the term "obtain" or "obtaining" is used herein and may indicate obtaining in e.g., memory such as in the case where the information is e.g., predefined. The term "obtain" or "obtaining" as used herein may also indicate obtaining by receiving signaling indicating the information obtained.

The term "signaling" used herein may comprise any of: high-layer signaling (e.g., via Radio Resource Control (RRC) or a like), lower-layer signaling (e.g., via a physical control channel or a broadcast channel), or a combination thereof. The signaling may be implicit or explicit. The signaling may further be unicast, multicast or broadcast. The signaling may also be directly to another node or via a third node.

Receiving (or obtaining) information may comprise receiving one or more information messages (e.g., an RRC or NAS message). It may be considered that receiving control signaling comprises demodulating and/or decoding and/or detecting one or more messages, in particular a message carried by the control signaling, e.g. based on an assumed set of resources, which may be searched and/or listened for the control information. It may be assumed that both sides of the communication are aware of the configurations, and may determine the set of resources, e.g. based on the reference size.

Signaling may generally comprise one or more symbols and/or signals and/or messages. A signal may comprise or represent one or more bits. An indication may represent signaling, and/or be implemented as a signal, or as a plurality of signals. One or more signals may be included in and/or represented by a message. Signaling, in particular control signaling, may comprise a plurality of signals and/or messages, which may be transmitted on different carriers and/or be associated to different signaling processes, e.g. representing and/or pertaining to one or more such processes and/or corresponding information. An indication may comprise signaling, and/or a plurality of signals and/or messages and/or may be comprised therein, which may be transmitted on different carriers and/or be associated to different acknowledgement signaling processes, e.g. representing and/or pertaining to one or more such processes. Signaling associated to a channel may be transmitted such that represents signaling and/or information for that channel, and/or that the signaling is interpreted by the transmitter and/or receiver to belong to that channel. Such signaling may generally comply with transmission parameters and/or format/s for the channel.

An indication (e.g., an indication of whether one or more services is allowed for a WD within a non-allowed area per the WD's/operator's subscription data/information, etc.) generally may explicitly and/or implicitly indicate the information it represents and/or indicates. Implicit indication may for example be based on position and/or resource used for transmission. Explicit indication may for example be based on a parametrization with one or more parameters, and/or one or more index or indices corresponding to a table, and/or one or more bit patterns representing the information.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments provide for subscription based service restriction.

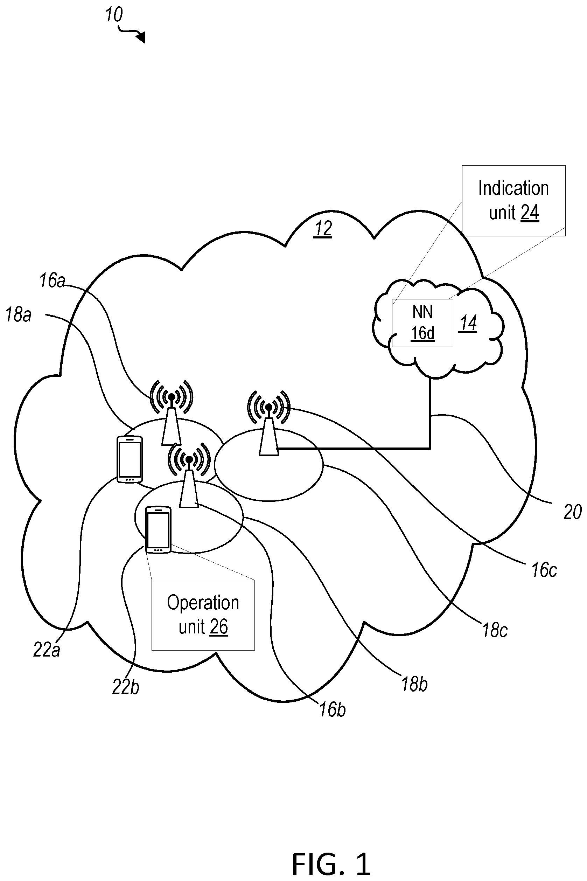

Referring now to the drawing figures, in which like elements are referred to by like reference numerals, there is shown in FIG. 1 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c, 16d (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. Network node 16d may be a network node of the core network 14, such as a mobility node (e.g., MME, AMF, etc.), a data management node (e.g., unified data management (UDM) node), or other core network node. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

A network node 16 is configured to include an indication unit 24 which is configured to provide support for at least one service for a WD 22 in a non-allowed area based at least in part on at least one of subscription data associated with the WD 22 and operator policy.

A wireless device 22 is configured to include an operation unit 26 which is configured to operate in a non-allowed area using at least one service that is allowed in the non-allowed area based at least in part on at least one of subscription data and operator policy.

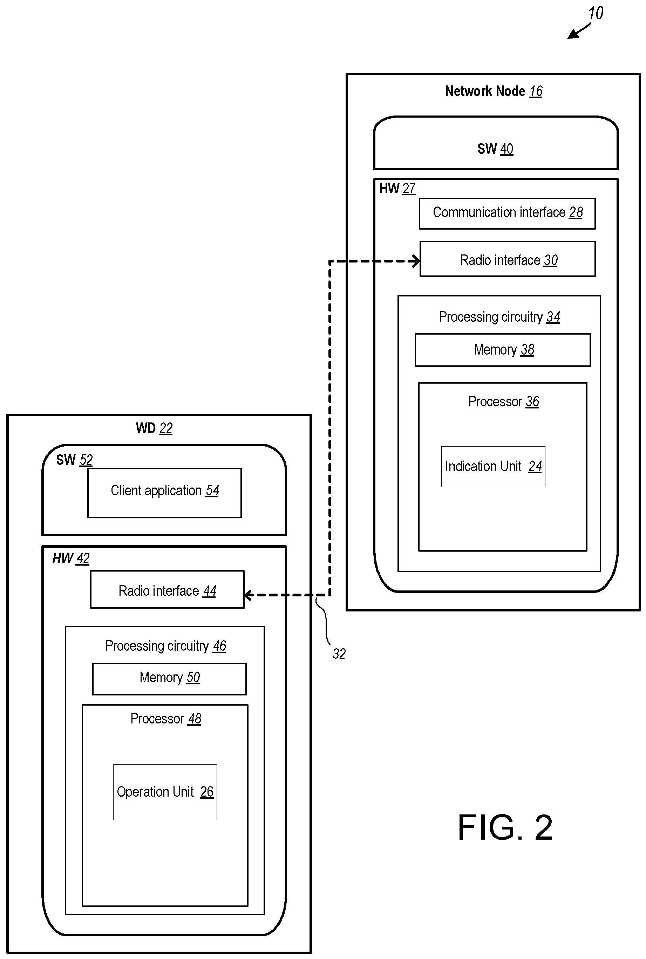

Example implementations, in accordance with an embodiment, of the WD 22 and network node 16 discussed in the preceding paragraphs will now be described with reference to FIG. 2.

The communication system 10 further includes a network node 16 provided in a communication system 10 and including hardware 27 enabling it to communicate with the WD 22. The hardware 27 may include a communication interface 28 for setting up and maintaining a wired or wireless connection with an interface of a different communication device of the communication system 10, as well as a radio interface 30 for setting up and maintaining at least a wireless connection 32 with a WD 22 located in a coverage area 18 served by the network node 16. The radio interface 30 may be formed as or may include, for example, one or more RF transmitters, one or more RF receivers, and/or one or more RF transceivers.

In the embodiment shown, the hardware 27 of the network node 16 further includes processing circuitry 34. The processing circuitry 34 may include a processor 36 and a memory 38. In particular, in addition to or instead of a processor, such as a central processing unit, and memory, the processing circuitry 34 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 36 may be configured to access (e.g., write to and/or read from) the memory 38, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

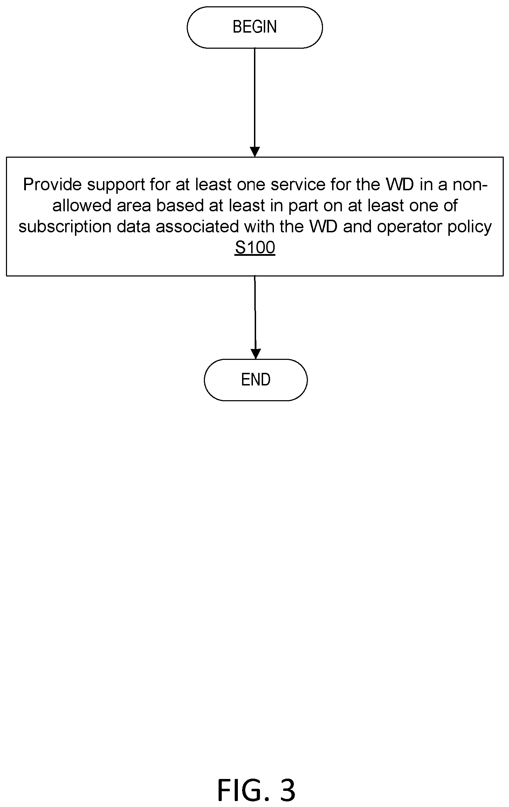

Thus, the network node 16 further has software 40 stored internally in, for example, memory 38, or stored in external memory (e.g., database, storage array, network storage device, etc.) accessible by the network node 16 via an external connection. The software 40 may be executable by the processing circuitry 34. The processing circuitry 34 may be configured to control any of the methods and/or processes described herein and/or to cause such methods, and/or processes to be performed, e.g., by network node 16. Processor 36 corresponds to one or more processors 36 for performing network node 16 functions described herein. The memory 38 is configured to store data, programmatic software code and/or other information described herein. In some embodiments, the software 40 may include instructions that, when executed by the processor 36 and/or processing circuitry 34, causes the processor 36 and/or processing circuitry 34 to perform the processes described herein with respect to network node 16. For example, processing circuitry 34 of the network node 16 may include indication unit 24 configured to perform network node methods discussed herein, such as the methods discussed with reference to FIG. 3 as well as other figures.

The communication system 10 further includes the WD 22 already referred to. The WD 22 may have hardware 42 that may include a radio interface 44 configured to set up and maintain a wireless connection 32 with a network node 16 serving a coverage area 18 in which the WD 22 is currently located. The radio interface 44 may be formed as or may include, for example, one or more RF transmitters, one or more RF receivers, and/or one or more RF transceivers.

The hardware 42 of the WD 22 further includes processing circuitry 46. The processing circuitry 46 may include a processor 48 and memory 50. In particular, in addition to or instead of a processor, such as a central processing unit, and memory, the processing circuitry 46 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 48 may be configured to access (e.g., write to and/or read from) memory 50, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 52, which is stored in, for example, memory 50 at the WD 22, or stored in external memory (e.g., database, storage array, network storage device, etc.) accessible by the WD 22. The software 52 may be executable by the processing circuitry 46. The software 52 may include a client application 54. The client application 54 may be operable to provide a service to a human or non-human user via the WD 22. The client application 54 may interact with the user to generate the user data that it provides.

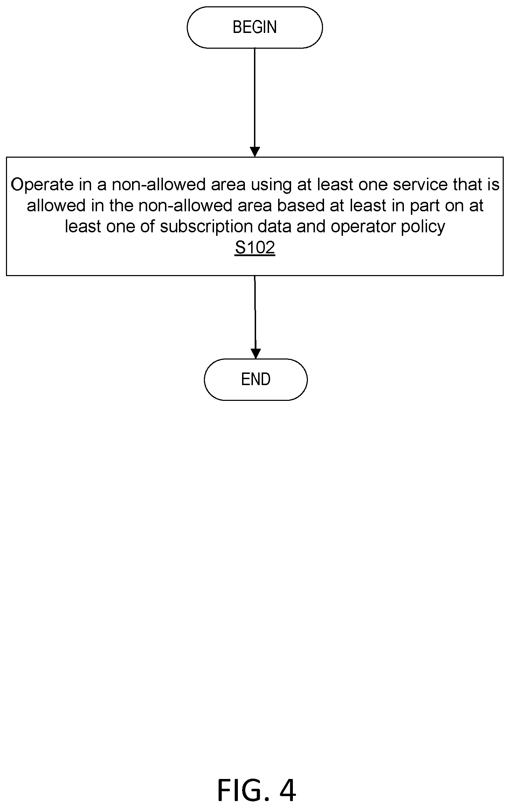

The processing circuitry 46 may be configured to control any of the methods and/or processes described herein and/or to cause such methods, and/or processes to be performed, e.g., by WD 22. The processor 48 corresponds to one or more processors 48 for performing WD 22 functions described herein. The WD 22 includes memory 50 that is configured to store data, programmatic software code and/or other information described herein. In some embodiments, the software 52 and/or the client application 54 may include instructions that, when executed by the processor 48 and/or processing circuitry 46, causes the processor 48 and/or processing circuitry 46 to perform the processes described herein with respect to WD 22. For example, the processing circuitry 46 of the wireless device 22 may include operation unit 26 configured to perform WD methods discussed herein, such as the methods discussed with reference to FIG 4 as well as other figures.

In some embodiments, the inner workings of the network node 16 and WD 22, may be as shown in FIG. 2 and independently, the surrounding network topology may be that of FIG. 1.

Although FIGS. 1 and 2 show various "units" such as indication unit 24 and operation unit 26 as being within a processor, it is contemplated that these units may be implemented such that a portion of the unit is stored in a corresponding memory within the processing circuitry. In other words, the units may be implemented in hardware or in a combination of hardware and software within the processing circuitry.

FIG. 3 is a flowchart of an example process in a network node 16 according to some embodiments of the present disclosure. One or more Blocks and/or functions and/or methods performed by the network node 16 may be performed by one or more elements of network node 16 such as by indication unit 24 in processing circuitry 34, processor 36, communication interface 28, radio interface 30, etc. according to the example method. The example method includes providing (Block S100), such as via indication unit 24, processing circuitry 34, processor 36, communication interface 28 and/or radio interface 30, support for at least one service for the WD in a non-allowed area based at least in part on at least one of subscription data associated with the WD and operator policy.

In some embodiments, the providing support further includes obtaining and/or sending, such as via indication unit 24, processing circuitry 34, processor 36, communication interface 28 and/or radio interface 30, a message indicating whether the at least one service is allowed for the WD in the non-allowed area. In some embodiments, the at least one service includes at least one of a short message service, SMS, over non-access stratum, a location service and an exception reporting service. In some embodiments, the message is a Namf_Communication_UEContextTransfer service message. In some embodiments, the message includes an indication of whether the at least one service is allowed for the WD 22 in the non-allowed area in a registration area field. In some embodiments, the message is a Nudm_SubscriberDataManagement service message. In some embodiments, the message includes an indication of whether the at least one service is allowed for the WD 22 in the non-allowed area in a service area restriction field. In some embodiments, the network node is one of an access and mobility function, AMF, node 16 and a unified data management, UDM, node 16. In some embodiments, the non-allowed area is: a service area in which the WD 22 is restricted based on subscription; and/or in which initiating a service request, a control plane service request or a session management, SM, signalling to obtain user services is not allowed.

FIG. 4 is a flowchart of an example process in a wireless device 22 according to some embodiments of the present disclosure. One or more Blocks and/or functions and/or methods performed by WD 22 may be performed by one or more elements of WD 22 such as by operation unit 26 in processing circuitry 46, processor 48, communication interface 28, radio interface 44, etc. The example method includes operating (Block S 102), such as via indication unit 24, processing circuitry 34, processor 36, communication interface 28 and/or radio interface 30, in a non-allowed area using at least one service that is allowed in the non-allowed area based at least in part on at least one of subscription data and operator policy.

In some embodiments, the at least one service includes at least one of a short message service, SMS, over non-access stratum, a location service and an exception reporting service. In some embodiments, the method further includes obtaining and/or sending, such as via indication unit 24, processing circuitry 34, processor 36, communication interface 28 and/or radio interface 30, a message indicating whether the at least one service is allowed for the WD 22 in the non-allowed area. In some embodiments, the message is at least one of a Nudm_SubscriberDataManagement service message and a Namf_Communication_UEContextTransfer service message. In some embodiments, the non-allowed area is: a service area in which the WD 22 is restricted based on subscription; and/or in which initiating a service request, a control plane service request or a session management, SM, signalling to obtain user services is not allowed.

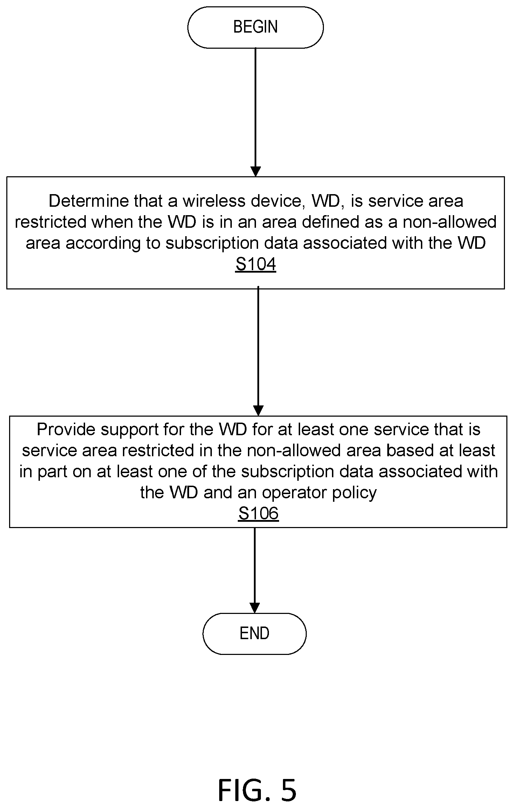

FIG. 5 is a flowchart of another example process in a network node 16 according to some embodiments of the present disclosure. One or more Blocks and/or functions and/or methods performed by the network node 16 may be performed by one or more elements of network node 16 such as by indication unit 24 in processing circuitry 34, processor 36, communication interface 28, radio interface 30, etc. according to the example method. The example method includes determining (Block S 104), such as by indication unit 24 in processing circuitry 34, processor 36, communication interface 28 and/or radio interface 30, that the WD 22 is service area restricted when the WD 22 is in an area defined as a non-allowed area according to subscription data associated with the WD 22. The method includes providing (Block S 106), such as by indication unit 24 in processing circuitry 34, processor 36, communication interface 28 and/or radio interface 30, support for the WD 22 for at least one service that is service area restricted in the non-allowed area based at least in part on at least one of the subscription data associated with the WD and an operator policy.

In some embodiments, providing the support further comprises obtaining and/or sending, such as by indication unit 24 in processing circuitry 34, processor 36, communication interface 28 and/or radio interface 30, a message indicating that the at least one service that is service area restricted is allowed for the WD in the non-allowed area. In some embodiments, the at least one service is not a regulatory prioritized service. In some embodiments, the at least one service includes at least one of a short message service, SMS, over non-access stratum, a location service and an exception reporting service. In some embodiments, the message is a Namf_Communication_UEContextTransfer service message. In some embodiments, the message includes a registration area field, the registration area field indicating whether the at least one service is allowed for the WD in the non-allowed area.

In some embodiments, the message is a Nudm_SubscriberDataManagement service message. In some embodiments, the message includes a service area restriction field, the service area restriction field indicating whether the at least one service is allowed for the WD in the non-allowed area. In some embodiments, the network node is one of an access and mobility function, AMF, node and a unified data management, UDM, node. In some embodiments, the non-allowed area is a service area in which the WD is not allowed to initiate a service request, a control plane service request and/or a session management, SM, signalling to obtain user services from a network associated with the network node. In some embodiments, providing, such as by indication unit 24 in processing circuitry 34, processor 36, communication interface 28 and/or radio interface 30, support for the WD for the at least one service in the non-allowed area when the at least one of the subscription data and the operator policy indicates that the at least one service is allowed in the non-allowed area; otherwise, restricting, such as by indication unit 24 in processing circuitry 34, processor 36, communication interface 28 and/or radio interface 30, the WD from using the at least one service in the non-allowed area.

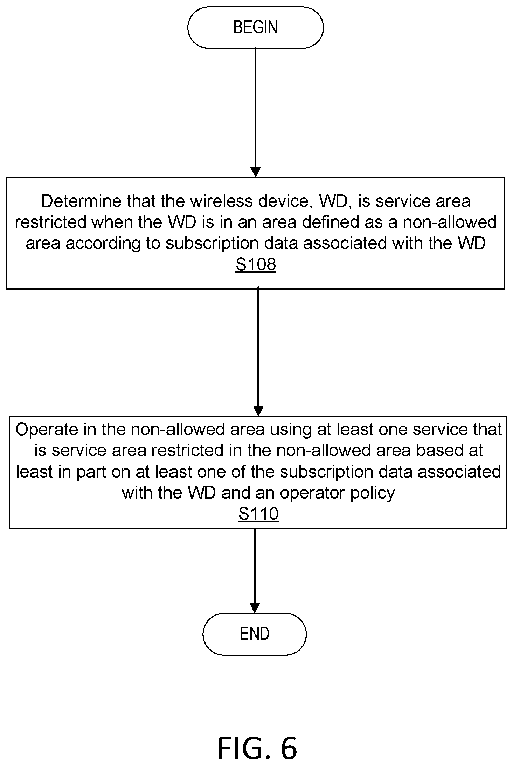

FIG. 6 is a flowchart of another example process in a wireless device 22 according to some embodiments of the present disclosure. One or more Blocks and/or functions and/or methods performed by WD 22 may be performed by one or more elements of WD 22 such as by operation unit 26 in processing circuitry 46, processor 48, communication interface 28, radio interface 44, etc. The example method includes determining (Block S108), such as by operation unit 26 in processing circuitry 46, processor 48, communication interface 28 and/or radio interface 44, that the WD 22 is service area restricted when the WD 22 is in an area defined as a non-allowed area according to subscription data associated with the WD 22. The method includes operating (Block S110), such as by operation unit 26 in processing circuitry 46, processor 48, communication interface 28 and/or radio interface 44, in the non-allowed area using at least one service that is service area restricted in the non-allowed area based at least in part on at least one of the subscription data associated with the WD 22 and an operator policy.

In some embodiments, the at least one service is not a regulatory prioritized service. In some embodiments, the at least one service includes at least one of a short message service, SMS, over non-access stratum, a location service and an exception reporting service. In some embodiments, the method further comprises obtaining, such as by operation unit 26 in processing circuitry 46, processor 48, communication interface 28 and/or radio interface 44, information indicating whether the at least one service is allowed for the WD 22 in the non-allowed area. In some embodiments, the information is comprised in at least one of a Nudm_SubscriberDataManagement service message and a Namf_Communication_UEContextTransfer service message.

In some embodiments, the information is included in a registration area field, the registration area field indicating whether the at least one service is allowed for the WD in the non-allowed area. In some embodiments, the information is included in a service area restriction field, the service area restriction field indicating whether the at least one service is allowed for the WD in the non-allowed area. In some embodiments, the non-allowed area is a service area in which the WD is not allowed to initiate a service request, a control plane service request and/or a session management, SM, signalling to obtain user services from a network associated with the network node.

In some embodiments, operating, such as by operation unit 26 in processing circuitry 46, processor 48, communication interface 28 and/or radio interface 44, in the non-allowed area using the at least one service when the at least one of the subscription data and the operator policy indicates that the at least one service is allowed in the non-allowed area; otherwise, operating, such as by operation unit 26 in processing circuitry 46, processor 48, communication interface 28 and/or radio interface 44, in the non-allowed area without using the at least one service.

Having described the general process flow of arrangements of the disclosure and having provided examples of hardware and software arrangements for implementing the processes and functions of the disclosure, the sections below provide details and examples of arrangements for subscription based service restriction, which may be implemented by the network node 16 and/or wireless device 22.

As noted above, the current arrangements for signaling allowed in a Non-Allowed Area is unclear. Some embodiments propose a clarification on what is allowed or not allowed in the Non-Allowed Area. Some embodiments propose a clarification on what services are not allowed, what services are allowed, and what services on based on operator policy in a Non-Allowed Area.

Some embodiments provide arrangements that support a per WD/UE 22 based specific service control in service restricted areas.

### 3GPP Technical Specification (TS) 23.501 Update

### Mobility Restrictions - General

In some embodiments, Mobility Restrictions restrict mobility handling or service access of a WD 22. The Mobility Restriction functionality may be provided by the WD 22 (only for mobility restriction categories provided to the WD 22), the radio access network (e.g., network node 16a) and the core network (e.g., network node 16d).

Unless otherwise stated herein, it is contemplated that Mobility Restrictions may only apply to 3GPP access and wireline access, they do not apply to other non-3GPP accesses.

*The WD 22 and the network (e.g., network node 16) may override any Forbidden Area, Non-Allowed area restrictions and Core Network type restriction whenever accessing the network for regulatory prioritized services like Emergency services and MPS (multi-media priority service).*

Service Area restrictions and handling of Forbidden Areas for Connection Management Idle (CM-IDLE) state and, for Connection Management Connected (CM-CONNECTED) state when in radio resource control (RRC) Inactive state are executed by the WD 22 based on information received from the core network. Mobility Restrictions for CM-CONNECTED state when in RRC-Connected state are executed by the radio access network (e.g., network node 16a) and the core network (e.g., network node 16d).

In a CM-CONNECTED state, the core network (e.g., network node 16d) provides Mobility Restrictions to the radio access network (e.g., network node 16a) within Mobility Restriction List. Mobility Restrictions may include radio access technology (RAT) restriction, Forbidden Area, Service Area Restrictions, Core Network type restriction and Closed Access Group (CAG) information as follows.

RAT restriction: Defines the 3GPP Radio Access Technology(ies), a WD 22 is not allowed to access in a public land mobile network (PLMN). In a restricted RAT a WD 22 based on subscription is not permitted access to the network for this PLMN. For CM-CONNECTED state, when radio access network determines target RAT and target PLMN during Handover (HO) procedure, it may take per PLMN RAT restriction into consideration. The RAT restriction is enforced in the network, and not provided to the WD 22.

Forbidden Area: In a Forbidden Area, the WD 22, based on subscription, is not permitted to initiate any communication with the network for this PLMN. The WD 22 behaviour in terms of cell selection, RAT selection and PLMN selection depends on the network response that informs the WD 22 of the Forbidden Area. A Forbidden Area applies either to 3GPP access or to non-3GPP access.

Further description on Forbidden Area when using wireline access is available in 3GPP Technical Specification (TS) 23.316.

NOTE 1: If the N3GPP tracking area identity (TAI) (see clause 5.3.2.3 of 3GPP TS 23.501) is forbidden in a PLMN, non-3GPP Access is forbidden altogether in this PLMN.

NOTE 2: The WD 22 reactions to specific network responses are described in 3GPP TS 24.501.

Service Area Restriction: Defines areas in which the WD 22 may or may not initiate communication with the network (e.g., network node 16) as follows:
- Allowed Area: In an Allowed Area, the WD 22 is permitted to initiate communication with the network as allowed by the subscription.
- Non-Allowed Area: In a Non-Allowed Area a WD 22 may be service area restricted based on subscription. The WD 22 and the network (e.g., network node 16) may not be allowed to initiate Service Request, *Control Plane Service Request*, or SM signalling (except for packet switched (PS) Data Off status change reporting) to obtain user services (both in CM-IDLE and in CM-CONNECTED states). *SMS over non-access stratum (NAS) service, location services, and exception reporting may be supported (e.g., by WD 22 and*/*or network node 16) based on subscription data and*/*or operator policy.* The WD 22 may not use the entering of a Non-Allowed Area as a criterion for Cell Reselection, a trigger for PLMN Selection or Domain selection for WD 22 originating sessions or calls. The RRC procedures while the WD 22 is in CM-CONNECTED with RRC Inactive state are unchanged compared to when the WD 22 is in an Allowed Area. The RM procedures are unchanged compared to when the WD 22 is in an Allowed Area. The WD 22 in a Non-Allowed Area may respond to core network paging or NAS Notification message from non-3GPP access with Service Request and RAN paging.

NOTE 3: When the services are restricted in 3GPP 5GS (also, called 5G system or 3GPP New Radio/NR system) due to Service Area Restriction, then it is assumed that the services will be also restricted in all RATs/Systems at the same location(s) using appropriate mechanisms available in the other RATs/Systems.
- Core Network type restriction: Defines whether WD 22 is allowed to connect to 5GC only, Evolved Packet Core (EPC) only, both 5GC (3GPP 5^{th} Generation Core) and EPC for this PLMN. The Core Network type restriction when received applies in the PLMN either to both 3GPP and non-3GPP Access Types or to non-3GPP Access Type only.

NOTE 4: The Core Network type restriction can be used e.g. in network deployments where the Evolved Universal Terrestrial Radio Access Network (E-UTRAN) connects to both EPC and 5GC as described in clause 5.17 of 3GPP TS 23.501.
- Closed Access Group information: As defined in clause 5.30.3 of 3GPP TS 23.501.

For a given WD 22, the core network (e.g., network node 16d) determines the Mobility Restrictions based on WD 22 subscription information, WD 22 location and/or local policy (e.g. if the Home PLMN (HPLMN) has not deployed 5GC, HPLMN ID of the WD 22 and the operator's policy are used in the Visited PLMN (VPLMN) for determining the Core Network type restriction). The Mobility Restriction may change due to e.g. WD's 22 subscription, location change and local policy. Optionally the Service Area Restrictions or the Non-Allowed Area may in addition be fine-tuned by the policy control function (PCF) e.g. based on WD 22 location, permanent equipment identifier (PEI) and network policies. Service Area Restrictions may be updated during a Registration procedure or WD 22 Configuration Update procedure.

NOTE 5: The subscription management ensure that for MPS service subscriber the Mobility Restrictions is not included.

If the network (e.g., network node 16) sends Service Area Restrictions to the WD 22, the network sends only either an Allowed Area, or a Non-Allowed Area, but not both at the same time, to the WD 22. If the WD 22 has received an Allowed Area from the network, any tracking area (TA) not part of the Allowed Area is considered by the WD 22 as non-allowed. If the WD 22 has received a Non-Allowed Area from the network, any TA not part of the Non-Allowed Area is considered by the WD 22 as allowed. If the WD 22 has not received any Service Area Restrictions, any TA in the PLMN is considered as allowed.

If the WD 22 has overlapping areas between Forbidden Areas, Service Area Restrictions, or any combination of them, the WD 22 may proceed in the following precedence order:
- The evaluation of Forbidden Areas may take precedence over the evaluation of Service Area Restrictions.

The Unified Data Management (UDM) may provide to the Access and Mobility Function (AMF) the information defined in TS 23.008 about the subscriber's NR or E-UTRA access restriction set by the operator determined e.g. by subscription scenario and roaming scenario, as follows:
- For NR:
   - NR not allowed as primary access.
   - NR not allowed as secondary access.
   - NR in unlicensed bands not allowed as primary access.
   - NR in unlicensed bands not allowed as secondary access.
- For E-UTRA:
   - E-UTRA not allowed as primary access.
   - E-UTRA not allowed as secondary access.
   - E-UTRA in unlicensed bands not allowed as secondary access.
   - Narrowband Internet-of-Things (NB-IoT) not allowed as primary access.
   - LTE for Machines (LTE-M) not allowed as primary access.

In order to enforce all primary access restrictions, the related access is to be deployed in different Tracking Area Codes and the subscriber may not be allowed to access the network in TAs using the particular access.

With all secondary access restrictions, the subscriber may not be allowed to use this access as secondary access.

### TS 23.502 Update

Some embodiments of the present disclosure may provide for clarifying that the information of the Restriction Area may also include specific indications which indicate if SMS over NAS service, Location Service and Exception Reporting are allowed in a Non-Allowed Area.

### Namf_Communication_UEContextTransfer service operation

### Service operation name: Namf_Communication_UEContextTransfer

Description: Provides the WD 22 context to the consumer Network Function (NF).

Input, Required: 5G globally unique temporary identifier (5G-GUTI) or a globally unique subscription permanent identifier (SUPI), Access Type, Reason.

Input, Optional: Integrity protected message from the WD 22 that triggers the context transfer.

Output, Required: The WD 22 context of the identified WD 22 or only the SUPI and an indication that the Registration Request has been validated. The WD 22 context is detailed in Table 1 below.

Output, Optional: Mobile Equipment Identifier (if available), Allowed network slice selection assistance information (NSSAI), Mapping Of Allowed NSSAI.

See clause 4.2.2.2.2 of 3GPP TS 23.502 for example of usage of this service operation. If the consumer NF sent an integrity protected message from the WD 22, the AMF (e.g., network node 16d) uses it to verify whether this request is permitted to retrieve the WD context of the WD 22. If it is permitted, the AMF (e.g., network node 16d) provides WD context to the consumer NF in the
Namf_Communication_UEContextTransfer response. The following table, Table 1, illustrates the WD Context:

**Table 1: WD Context in AMF (e.g., network node 16)**

| **Field** | **Description** | |
|---|---|---|
| SUPI | SUPI (Subscription Permanent Identifier) is the subscriber's permanent identity in 5GS. | |
| Routing Indicator | WD's Routing Indicator that allows together with SUCI/SUPI Home Network Identifier to route network signalling to AUSF and UDM instances capable to serve the subscriber | |
| AUSF Group ID | The AUSF Group ID for the given WD. | |
| UDM Group ID | The UDM Group ID for the WD. | |
| PCF Group ID | The PCF Group ID for the WD. | |
| SUPI-unauthenticated-indicator | This indicates whether the SUPI is unauthenticated. | |
| GPSI | The GPSI(s) of the WD. The presence is dictated by its storage in the UDM. | |
| 5G-GUTI | 5G Globally Unique Temporary Identifier. | |
| PEI | Mobile Equipment Identity | |
| Internal Group ID-list | List of the subscribed internal group(s) that the WD belongs to. | |
| WD Specific DRX Parameters | WD specific DRX parameters. | |
| WD MM Network Capability | Indicates the WD MM network capabilities. | |
| 5GMM Capability | Includes other WD capabilities related to 5GCN or interworking with EPS. | |
| Events Subscription | List of the event subscriptions by other CP NFs. Indicating the events being subscribed as well as any information on how to send the corresponding notifications | |
| LTE-M Indication | Indicates if the WD is a Category M WD. This is based on indication provided by the NG-RAN or by the MME at EPS to 5GS handover. | |
| MO Exception Data Counter | MO Exception Data Counter used for Small Data Rate Control purposes, see clause 5.31.14.3 of TS 23.501 [2]. | |
| AMF-Associated Expected WD Behaviour parameters | Indicates per WD the Expected WD Behaviour Parameters and their corresponding validity times as specified in clause 4.15.6.3. | |

| **For the AM Policy Association:** | | |
|---|---|---|
| AM Policy Information | Information on AM policy provided by PCF. Includes the Policy Control Request Triggers and the Policy Control Request Information. Includes the authorized RFSP and the authorized Service Area Restrictions. | |
| PCF ID | The identifier of the PCF for AM Policy. In roaming, the identifier of V-PCF (NOTE 2). | |

| **For the WD Policy Association:** | | |
|---|---|---|
| Trigger Information | The Policy Control Request Triggers on WD policy provided by PCF. | |
| PCF ID(s) | The identifier of the PCF for WD Policy. In roaming, the identifiers of both V-PCF and H-PCF (NOTE 1) (NOTE 2). | |
| Subscribed RFSP Index | An index to specific RRM configuration in the NG-RAN that is received from the UDM. | |
| RFSP Index in Use | An index to specific RRM configuration in the NG-RAN that is currently in use. | |
| WD-AMBR in serving network | The WD-AMBR that has been sent to RAN (e.g. based on subscribed WD-AMBR from UDM or WD-AMBR received from PCF) | |
| MICO Mode Indication | Indicates the MICO Mode for the WD. | |
| Extended idle mode DRX Parameters | Negotiated extended idle mode DRX parameters. | |
| Active Time Value for MICO mode | WD specific Active Time value allocated by AMF for MICO mode handling. | |
| Strictly Periodic Registration Timer Indication | An indication that WD shall perform the Periodic Registration Update in a strictly periodic time, see TS 23.501 [2], clause 5.31.7.5. | |
| Voice Support Match Indicator | An indication whether the WD radio capabilities are compatible with the network configuration. The AMF uses it as an input for setting the IMS voice over PS Session Supported Indication over 3GPP access. | |
| Homogenous Support of IMS Voice over PS Sessions | Indicates per WD if "IMS Voice over PS Sessions" is homogeneously supported in all TAs in the serving AMF or homogeneously not supported, or, support is non-homogeneous/unknown, see clause 5.16.3.3 of TS 23.501 [2]. | |
| WD Radio Capability for Paging Information | Information used by the NG-RAN to enhance the paging towards the WD (see clause 5.4.4.1 of TS 23.501 [2]). | |
| Information On Recommended Cells And RAN nodes For Paging | Information sent by the NG-RAN, and used by the AMF when paging the WD to help determining the NG-RAN nodes to be paged as well as to provide the information on recommended cells to each of these NG-RAN nodes, in order to optimize the probability of successful paging while minimizing the signalling load on the radio path. | |
| WD Radio Capability Information | Information sent by the NG-RAN node and stored in the AMF. The AMF sends this information to the NG-RAN node within the WD context during transition to CM-CONNECTED state, except for NB-IoT when NB-IoT specific WD Radio Access Capability are sent instead. | |
| WD Radio Capability ID | Pointer that uniquely identifies a set of WD Radio Capabilities in UCMF as defined in TS 23.501 [2]. | |
| NB-IoT specific WD Radio Access Capability Information | NB-IoT specific WD radio access capabilities. | |
| WUS Assistance Information | Assistance information for determining the WUS group (see TS 23.501 [2]). | |
| SMSF Identifier | The Identifier of the SMSF serving the WD in RM-REGISTERED state. | |
| SMSF Address | The Address of the SMSF serving the WD in RM-REGISTERED state. (see clause 4.13.3.1). | |
| SMS Subscription | Indicates subscription to any SMS delivery service over NAS irrespective of access type. | |
| SEAF data | Master security information received from AUSF. | |
| Last used EPS PLMN ID | The identifier of the last used EPS PLMN. | |
| Paging Assistance Data for CE capable WD | Paging Assistance Data for Enhanced Coverage level and cell ID provided by the last NG-RAN the WD was connected to. | |
| Enhanced Coverage Restricted Information | Specifies whether CE mode B is restricted for the WD, or both CE mode A and CE mode B are restricted for the WD, or both CE mode A and CE mode B are not restricted for the WD. | |
| Service Gap Time | Used to set the Service Gap timer for Service Gap Control (see TS 23.501 [2] clause 5.31.16). | |
| Running Service Gap expiry time | The time of expiry of a currently running Service Gap Timer (see TS 23.501 [2] clause 5.31.16). | |
| NB-IoT WD Priority | Numerical value used by the NG-RAN to prioritise between WDs accessing via NB-IoT. | |
| List of Small Data Rate Control Statuses | List of Small Data Rate Control Statuses by DNN and S-NSSAI for the released PDU Sessions, see TS 23.501 [2] clause 5.31.14.3. | |
| List of APN Rate Control Statuses | Indicates for each APN, the APN Rate Control Status (see TS 23.401 [13] clause 4.7.7.3) received from an MME when mobility from EPC to 5GC occurs. This information is provided to the MME during 5GC to EPC mobility. | |

| **For each access type level context within the WD access and mobility context:** | | |
|---|---|---|
| Access Type | Indicates the access type for this context. | |
| RM State | Registration management state. | |
| Registration Area *with additional SMS over NAS*/*Location service*/*Exception Reporting support indications.* | Current Registration Area (a set of tracking areas in a tracking area identity (TAI) List). *If one or more of certain services, e.g., SMS over NAS, Location service, Exception Reporting, etc. are allowed in a Non-Allowed Area as an exception, specific indications may be included as well.* | |
| TAI of last Registration | TAI of the TA in which the last Registration Request was initiated. | |
| User Location Information | Information on user location. | |
| Mobility Restrictions | Mobility Restrictions restrict mobility handling or service access of a WD. It consists of RAT restriction, Forbidden area, Service area restrictions and Core Network type restriction. It may also contain an Allowed CAG list and, optionally an indication whether the WD is only allowed to access 5GS via CAG cells. | |
| Security Information for CP | As defined in TS 33.501 [15]. | |
| Security Information for UP | As defined in TS 33.501 [15]. | |
| Allowed NSSAI | Allowed NSSAI consisting of one or more S-NSSAIs for serving PLMN in the present Registration Area. | |
| Mapping Of Allowed NSSAI | Mapping Of Allowed NSSAI is the mapping of each S-NSSAI of the Allowed NSSAI to the S-NSSAIs of the Subscribed S-NSSAIs. | |
| S-NSSAIs subject to Network Slice-Specific Authentication and Authorization | Subscribed S-NSSAIs Subject to NSSAA as to allow the AMF to initiate the NSSAA procedure for a certain S-NSSAI which was previously authorized. | |
| | Also including the status, i.e. result, of the NSSAA. | |
| Inclusion of NSSAI in RRC Connection Establishment Allowed by HPLMN | [Only for 3GPP access] it defines whether the UDM has indicated that the WD is allowed to include NSSAI in the RRC connection Establishment in clear text. | |
| Access Stratum Connection Establishment NSSAI Inclusion Mode | Defines what NSSAI, if any, to include in the Access Stratum connection establishment as specified in TS 23.501 [2] clause 5.15.9. | |
| CM state for WD connected via N31WF/TNGF | Identifies the WD CM state (CM-IDLE, CM-CONNECTED) for WD connected via N31WF/TNGF | |
| N2 address information for N3IWF/TNGF | Identifies the N3IWF/TNGF to which WD is connected. Exists only if CM state for WD connected via N3IWF/TNGF is CM-CONNECTED. | |
| AMF WD NGAP ID | Identifies the WD association over the NG interface within the AMF as defined in TS 38.413 [10]. This parameter exists only if CM state for the respective Access Type is CM-CONNECTED. | |
| RAN WD NGAP ID | Identifies the WD association over the NG interface within the NG-RAN node as defined in TS 38.413 [10]. This parameter exists only if CM state for the respective Access Type is CM-CONNECTED. | |
| Network Slice Instance(s) | The Network Slice Instances selected by 5GC for this WD. | |
| URRP-AMF information | WD Reachability Request Parameter contains a list of URRP-AMF flags and associated authorised NF IDs. Each URRP-AMF flag indicates whether direct WD reachability notification has been authorised by the HPLMN towards the associated NF ID or not. | |
| SoR Update Indicator for Initial Registration | An indication whether the UDM requests the AMF to retrieve SoR information when the WD performs NAS Registration Type "Initial Registration". | |
| SoR Update Indicator for Emergency Registration | An indication whether the UDM requests the AMF to retrieve SoR information when the WD performs NAS Registration Type "Emergency Registration". | |
| Charging Characteristics | The Charging Characteristics as defined in Annex A, clause A.1 of TS 32.256 [71]. | |

| **For each PDU Session level context:** | | |
|---|---|---|
| S-NSSAI(s) | The S-NSSAI(s) associated to the PDU Session. | |
| DNN | The associated DNN for the PDU Session. | |
| Network Slice Instance id | The network Slice Instance information for the PDU Session | |
| PDU Session ID | The identifier of the PDU Session. | |
| SMF Information | The associated SMF identifier and SMF address for the PDU Session. | |
| Access Type | The current access type for this PDU Session. | |
| EBI-ARP list | The allocated EBI and associated ARP pairs for this PDU session. | |
| 5GSM Core Network Capability | The WDs 5GSM Core Network Capability as defined in TS 23.501 [2] clause 5.4.4b. | |
| SMF derived CN assisted RAN parameters tuning | These are PDU Session specific parameters received from the SMF and used by the AMF to derive the Core Network assisted RAN parameters tuning. | |
| NOTE 1: | The AMF transfers the PCF ID to the SMF during PDU Session Establishment. The SMF may select the PCF identified by the PCF ID as described in TS 23.501 [2], clause 6.3.7.1. In HR roaming case, the AMF transfers the identifier of H-PCF as described in clause 4.3.2.2.2. In LBO roaming case, the AMF transfers the identifier of V-PCF as described in clause 4.3.2.2.1. | |
| NOTE 2: | The PCF ID in AM Policy Association information and the PCF ID in WD Policy Association Information should be the same in non-roaming case. The V-PCF ID in AM Policy Association information and the V-PCF ID in WD Policy Association Information should be the same in roaming case. | |

Subscription data types used in the Nudm_SubscriberDataManagement Service (e.g., provided by UDM) are defined in Table 2 below.

**Table 2: WD Subscription data types**

| **Subscription data type** | **Field** | **Description** |
|---|---|---|
| Access and Mobility Subscription data (data needed for WD Registration and Mobility Management) | GPSI List | List of the GPSI (Generic Public Subscription Identifier) used both inside and outside of the 3GPP system to address a 3GPP subscription. |
| | Internal Group ID-list | List of the subscribed internal group(s) that the WD belongs to. |
| | Subscribed-WD-AMBR | The Maximum Aggregated uplink and downlink MBRs to be shared across all Non-GBR QoS Flows according to the subscription of the user. |
| | Subscribed S-NSSAIs | The Network Slices that the WD subscribes to. In the roaming case, it indicates the subscribed Network Slices applicable to the Serving PLMN. |
| | Default S-NSSAIs | The Subscribed S-NSSAIs marked as default S-NSSAI. In the roaming case, only those applicable to the Serving PLMN. |
| | S-NSSAIs subject to Network Slice-Specific Authentication and Authorization | The Subscribed S-NSSAIs marked as subject to NSSAA. |
| | WD Usage Type | As defined in TS 23.501 [2], clause 5.15.7.2. |
| | RAT restriction | 3GPP Radio Access Technology(ies) not allowed the WD to access. |
| | Forbidden area | Defines areas in which the WD is not permitted to initiate any communication with the network. |
| | Service Area Restriction *with additional SMS over NAS*/*Location service*/*Exception Reporting support indications.* | Indicates Allowed areas in which the WD is permitted to initiate communication with the network, and Non-allowed areas in which the WD and the network are not allowed to initiate Service Request or SM signalling to obtain user services. *If one or more of certain services, e.g., SMS over NAS, Location service, Exception Reporting, are allowed in a Non-Allowed Area as an exception, specific indications may be included.* |
| | Core Network type restriction | Defines whether WD is allowed to connect to 5GC and/or EPC for this PLMN. |
| | CAG information | The CAG information includes Allowed CAG list and, optionally an indication whether the WD is only allowed to access 5GS via CAG cells as defined in TS 23.501 [2], clause 5.30.3. |
| | CAG information Subscription Change Indication | When present, indicates to the serving AMF that the CAG information in the subscription data changed and the WD must be updated. |
| | RFSP Index | An index to specific RRM configuration in the NG-RAN. |
| | Subscribed Periodic Registration Timer | Indicates a subscribed Periodic Registration Timer value. |
| | MPS priority | Indicates the user is subscribed to MPS as indicated in TS 23.501 [2], clause 5.16.5. |
| | MCX priority | Indicates the user is subscribed to MCX as indicated in TS 23.501 [2], clause 5.16.6. |
| | AMF-Associated Expected WD Behaviour parameters | Information on expected WD movement and communication characteristics. See clause 4.15.6.3 |
| | AMF-Associated Network Configuration parameters | Information on WD specific network configuration parameters and their corresponding validity times. See clause 4.15.6.3a. |
| | Steering of Roaming | List of preferred PLMN/access technology combinations or HPLMN indication that no change of the "Operator Controlled PLMN Selector with Access Technology" list stored in the WD is needed (see NOTE 3). |
| | | Optionally includes an indication that the UDM requests an acknowledgement of the reception of this information from the WD. |
| | SoR Update Indicator for Initial Registration | An indication whether the UDM requests the AMF to retrieve SoR information when the WD performs Registration with NAS Registration Type "Initial Registration". |
| | SoR Update Indicator for Emergency Registration | An indication whether the UDM requests the AMF to retrieve SoR information when the WD performs Registration with NAS Registration Type "Emergency Registration". |
| | Network Slicing Subscription Change Indicator | When present, indicates to the serving AMF that the subscription data for network slicing changed and the WD configuration must be updated. |
| | Tracing Requirements | Trace requirements about a WD (e.g. trace reference, address of the Trace Collection Entity, etc.) is defined in TS 32.421 [39]. |
| | | This information is only sent to AMF in the HPLMN or one of its equivalent PLMN(s). |
| | Inclusion of NSSAI in RRC Connection Establishment Allowed | When present, it is used to indicate that the WD is allowed to include NSSAI in the RRC connection Establishment in clear text for 3GPP access. |
| | Service Gap Time | Used to set the Service Gap timer for Service Gap Control (see TS 23.501 [2] clause 5.31.16). |
| | Subscribed DNN list | List of the subscribed DNNs for the WD (NOTE 1). Used to determine the list of LADN available to the WD as defined in clause 5.6.5 of TS 23.501 [2]. |
| | UDM Update Data | Includes a set of parameters (e.g. updated Default Configured NSSAI and/or updated Routing Indicator) to be delivered from UDM to the WD via NAS signalling as defined in clause 4.20 (NOTE 3). |
| | | Optionally includes an indication that the UDM requests an acknowledgement of the reception of this information from the WD and an indication for the WD to re-register. |
| | NB-IoT WD priority | Numerical value used by the NG-RAN to prioritise between WDs accessing via NB-IoT. |
| | Enhanced Coverage Restriction | Specifies whether CE mode B is restricted for the WD, or both CE mode A and CE mode B are restricted for the WD, or both CE mode A and CE mode B are not restricted for the WD. |
| | IAB-Operation allowed | Indicates that the subscriber is allowed for IAB-operation as specified in TS 23.501 [2] clause 5.35.2. |
| | Charging Characteristics | It contains the Charging Characteristics as defined in Annex A, clause A.1 of TS 32.256 [71]. |
| | Extended idle mode DRX cycle length | Indicates a subscribed extended idle mode DRX cycle length value. |
| Slice Selection Subscription data (data needed for | Subscribed S-NSSAIs | The Network Slices that the WD subscribes to. In roaming case, it indicates the subscribed network slices applicable to the serving PLMN. |
| Slice Selection as described in clause 4.2.2.2.3 and in clause 4.11.0a.5) | Default S-NSSAIs | The Subscribed S-NSSAIs marked as default S-NSSAI. In the roaming case, only those applicable to the Serving PLMN. |
| | S-NSSAIs subject to Network Slice-Specific Authentication and Authorization | The Subscribed S-NSSAIs marked as subject to NSSAA. |
| WD context in AMF data | AMF | Allocated AMF for the registered WD. Include AMF address and AMF NF Id. |
| | Access Type | 3GPP or non-3GPP access through this AMF |
| | Homogenous Support of IMS Voice over PS Sessions for AMF | Indicates per WD and AMF if "IMS Voice over PS Sessions" is homogeneously supported in all TAs in the serving AMF or homogeneously not supported, or, support is nonhomogeneous/unknown, see clause 5.16.3.3 of TS 23.501 [2]. |
| | URRP-AMF information | WD Reachability Request Parameter indicating that WD reachability notification from AMF has been subscribed by the UDM. The information is per WD and should be kept even when the contexts related to a specific AMF is removed. |
| SMF Selection Subscription data (data needed for SMF Selection as described in clause 6.3.2 of TS 23.501 [2]) | SUPI | Key |
| | **SMF Selection Subscription data contains one or more S-NSSAI level subscription data:** | |
| | S-NSSAI | Indicates the value of the S-NSSAI. |
| | Subscribed DNN list | List of the subscribed DNNs for the WD (NOTE 1). |
| | Default DNN | The default DNN if the WD does not provide a DNN (NOTE 2). |
| | LBO Roaming Information | Indicates whether LBO roaming is allowed per DNN, or per (S-NSSAI, subscribed DNN). |
| | Interworking with EPS indication list | Indicates whether EPS interworking is supported per (S-NSSAI, subscribed DNN). |
| | Same SMF for Multiple PDU Sessions to the same DNN and S-NSSAI | Indication whether the same SMF for multiple PDU Sessions to the same DNN and S-NSSAI is required. |
| | Invoke NEF indication | When present, indicates, per S-NSSAI and per DNN, that NEF based infrequent small data transfer shall be used for the PDU Session (see NOTE 8). |
| | SMF information for static IP address/prefix | When static IP address/prefix is used, this may be used to indicate the associated SMF information per (S-NSSAI, DNN). |
| WD context in SMF data | SUPI | Key. |
| | PDU Session Id(s) | List of PDU Session Id(s) for the WD. |
| | **For emergency PDU Session Id:** | |
| | Emergency Information | The PGW-C+SMF FQDN for emergency session used for interworking with EPC. |
| | **For each non-emergencv PDU Session Id:** | |
| | DNN | DNN for the PDU Session. |
| | SMF | Allocated SMF for the PDU Session. Includes SMF IP Address and SMF NF Id. |
| | PGW-C+SMF FQDN | The S5/S8 PGW-C+SMF FQDN used for interworking with EPS (see NOTE 5). |
| SMS Management Subscription data (data needed by SMSF for SMSF Registration) | SMS parameters | Indicates SMS parameters subscribed for SMS service such as SMS teleservice, SMS barring list |
| | Trace Requirements | Trace requirements about a WD (e.g. trace reference, address of the Trace Collection Entity, etc.) is defined in TS 32.421 [39]. |
| | | This information is only sent to a SMSF in HPLMN. |
| SMS Subscription data (data needed in AMF) | SMS Subscription | Indicates subscription to any SMS delivery service over NAS irrespective of access type. |
| WD Context in SMSF data | SMSF Information | Indicates SMSF allocated for the WD, including SMSF address and SMSF NF ID. |
| | Access Type | 3GPP or non-3GPP access through this SMSF |
| Session Management Subscription data (data needed for PDU Session Establishment) | GPSI List | List of the GPSI (Generic Public Subscription Identifier) used both inside and outside of the 3GPP system to address a 3GPP subscription. |
| | Internal Group ID-list | List of the subscribed internal group(s) that the WD belongs to. |
| | Trace Requirements | Trace requirements about a WD (e.g. trace reference, address of the Trace Collection Entity, etc...) is defined in TS 32.421 [39]. |
| | | This information is only sent to a SMF in the HPLMN or one of its equivalent PLMN(s). |
| | Session Management Subscription data contains one or more S-NSSAI level subscription data: | |
| | S-NSSAI | Indicates the value of the S-NSSAI. |
| | Subscribed DNN list | List of the subscribed DNNs for the S-NSSAI (NOTE 1). |
| | **For each DNN in S-NSSAI level subscription data:** | |
| | DNN | DNN for the PDU Session. |
| | Frame Routes | Set of Frame Route information. A Frame Route refers to a range of IPv4 addresses / IPv6 Prefixes to associate with a PDU Session established on this (DNN, S-NSSAI). See NOTE 4. |
| | Allowed PDU Session Types | Indicates the allowed PDU Session Types (IPv4, IPv6, IPv4v6, Ethernet, and Unstructured) for the DNN, S-NSSAI. See NOTE 6. |
| | Default PDU Session Type | Indicates the default PDU Session Type for the DNN, S-NSSAI. |
| | Allowed SSC modes | Indicates the allowed SSC modes for the DNN, S-NSSAI. |
| | Default SSC mode | Indicate the default SSC mode for the DNN, S-NSSAI. |
| | Interworking with EPS indication | Indicates whether interworking with EPS is supported for this DNN and S-NSSAI. |
| | 5GS Subscribed QoS profile | The QoS Flow level QoS parameter values (5QI and ARP) for the DNN, S-NSSAI (see clause 5.7.2.7 of TS 23.501 [2]). |
| | Charging Characteristics | It contains Charging Characteristics as defined in Annex A, clause A.1 of TS 32.255 [45]. This information, when provided, shall override any corresponding predefined information at the SMF. |
| | Subscribed-Session-AMBR | The maximum aggregated uplink and downlink MBRs to be shared across all Non-GBR QoS Flows in each PDU Session, which are established for the DNN, S-NSSAI. |
| | Static IP address/prefix | Indicate the static IP address/prefix for the DNN, S-NSSAI. |
| | User Plane Security Policy | Indicates the security policy for integrity protection and encryption for the user plane. |
| | PDU Session continuity at inter RAT mobility | Provides for this DDN, S-NSSAI how to handle a PDU Session when WD the moves to or from NB-IoT. Possible values are: maintain the PDU session; disconnect the PDU session with a reactivation request; disconnect PDU session without reactivation request; or to leave it to local VPLMN policy. |
| | NEF Identity for NIDD | When present, indicates, per S-NSSAI and per DNN, the identity of the NEF to anchor Unstructured PDU Session. When not present for the S-NSSAI and DNN, the PDU session terminates in UPF (see NOTE 8). |
| | NIDD information | Information such as External Group Identifier, External Identifier, MSISDN, or AF ID used for SMF-NEF Connection. |
| | SMF-Associated Expected WD Behaviour parameters | Parameters on expected characteristics of a PDU Session their corresponding validity times as specified in clause 4.15.6.3. |
| | SMF-Associated Network Configuration parameters | Parameters on expected PDU session characteristics their corresponding validity times as specified in clause 4.15.6.3a. |
| | ATSSS information | Indicates whether MA PDU session establishment is allowed. |
| | Secondary authentication indication | Indicates that whether the Secondary authentication/authorization is required for PDU Session Establishment as specified in clause 4.3.2.3. |
| Identifier translation | SUPI | Corresponding SUPI for input GPSI. |
| | (Optional) MSISDN | Corresponding GPSI (MSISDN) for input GPSI (External Identifier). This is optionally provided for legacy SMS infrastructure not supporting MSISDN-less SMS. The presence of an MSISDN should be interpreted as an indication to the NEF that MSISDN shall be used to identify the WD when sending the SMS to the SMS-SC via T4. |
| | GPSI | Corresponding GPSI for input SUPI and Application Port ID. |
| Intersystem continuity Context | (DNN, PGW FQDN) list | For each DNN, indicates the PGW-C+SMF which support interworking with EPC. |
| LCS privacy (data needed by GMLC) | LCS privacy profile data | Provides information for LCS privacy classes and Location Provacy Indication (LPI) as defined in clause 5.4.2 in TS 23.273 [51] |
| LCS mobile origination (data needed by AMF) | LCS Mobile Originated Data | When present, indicates to the serving AMF which LCS mobile originated services are subscribed as defined in clause 7.1 in TS 23.273 [51]. |
| WD reachability | WD reachability information | Provides, per PLMN, the list of NF IDs or the list of NF sets or the list of NF types authorized to request notification for WD's reachability (NOTE 7). |
| Steering of Roaming information | Steering of Roaming | List of preferred PLMN/access technology combinations or HPLMN indication that no change of the "Operator Controlled PLMN Selector with Access Technology" list stored in the WD is needed (see NOTE 3). |
| | | Optionally, it includes an indication that the UDM requests an acknowledgement of the reception of this information from the WD. |
| NOTE 1: | The Subscribed DNN list can include a wildcard DNN. | |
| NOTE 2: | The default DNN shall not be a wildcard DNN. | |
| NOTE 3: | The Steering of Roaming information and UDM Update Data are protected using the mechanisms defined in TS 33.501 [15]. | |
| NOTE 4: | Frame Route(s) are defined in TS 23.501 [2]. Frame Route information may refer to a range of IPv4 addresses (an IPv4 address and an IPv4 address mask) and/or a range of IPv6 Prefixes (an IPv6 Prefix and an IPv6 Prefix length). | |
| NOTE 5: | Depending on the scenario PGW-C FQDN may be for S5/S8, or for S2b (ePDG case). | |
| NOTE 6: | The Allowed PDU Session Types configured for a DNN which supports interworking with EPC should contain only the PDU Session Type corresponding to the PDN Type configured in the APN that corresponds to the DNN. | |
| NOTE 7: | Providing a list of NF types or a list of NF sets may be more appropriate for some deployments, e.g. in highly dynamic NF lifecycle management deployments. | |
| NOTE 8: | For a S-NSSAI and a DNN, the "Invoke NEF Indication" shall be present in the SMF selection subscription data if and only if the "NEF Identity for NIDD" Session Management Subscription Data includes a NEF Identity. When the "NEF Identity for NIDD" Session Management Subscription Data includes a NEF Identity for a S-NSSAI and DNN, the "Control Plane Only Indicator" will always be set for PDU Sessions to this S-NSSAI and DNN (see TS 23.501 [2], clause 5.31.4.1). | |

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Unless mention was made above to the contrary, it should be noted that all of the accompanying drawings are not to scale. A variety of modifications and variations are possible in light of the above teachings without departing from the scope of the following claims.

## Claims

1. A method implemented in a wireless device, WD (22), the method comprising:
determining (S108) that the WD (22) is service area restricted when the WD (22) is in an area defined as a non-allowed area according to subscription data associated with the WD (22); and
operating (S110) in the non-allowed area using at least one service that is service area restricted in the non-allowed area based at least in part on at least one of the subscription data associated with the WD (22) and an operator policy,
wherein the method further comprises:
obtaining information indicating whether the at least one service is allowed for the WD (22) in the non-allowed area.

2. The method of Claim 1, wherein:
- the at least one service is not a regulatory prioritized service; or
- the at least one service includes at least one of a short message service, SMS, over non-access stratum, a location service and an exception reporting service.

3. The method of Claim 1 or 2, wherein the information is comprised in at least one of a Nudm_SubscriberDataManagement service message and a Namf_Communication_UEContextTransfer service message.

4. The method of Claim 3, wherein:
- the information is included in a registration area field, the registration area field indicating whether the at least one service is allowed for the WD (22) in the non-allowed area; or
- the information is included in a service area restriction field, the service area restriction field indicating whether the at least one service is allowed for the WD (22) in the non-allowed area.

5. The method of any one of Claims 1-4, wherein:
- the non-allowed area is a service area in which the WD (22) is not allowed to initiate a service request, a control plane service request and/or a session management, SM, signalling to obtain user services from a network associated with a network node (16); and/or
- operating in the non-allowed area using the at least one service when the at least one of the subscription data and the operator policy indicates that the at least one service is allowed in the non-allowed area; otherwise, operating in the non-allowed area without using the at least one service.

6. A method implemented in a network node (16), the method comprising:
determining (S104) that a wireless device, WD (22), is service area restricted when the WD (22) is in an area defined as a non-allowed area based on subscription data associated with the WD (22); and
providing (S106) support for the WD (22) for at least one service that is service area restricted in the non-allowed area based at least in part on at least one of the subscription data associated with the WD (22) and an operator policy,
wherein providing the support further comprises:
obtaining and/or sending a message indicating that the at least one service that is service area restricted is allowed for the WD (22) in the non-allowed area.

7. The method of Claim 6, wherein:
- the at least one service is not a regulatory prioritized service; and/or
- the at least one service includes at least one of a short message service, SMS, over non-access stratum, a location service and an exception reporting service.

8. The method of Claim 6 or 7, wherein the message is a Namf_Communication_UEContextTransfer service message; and, optionally,
wherein the message includes a registration area field, the registration area field indicating whether the at least one service is allowed for the WD (22) in the non-allowed area.

9. The method of Claim 6 or 7, wherein the message is a Nudm_SubscriberDataManagement service message; and, optionally,
wherein the message includes a service area restriction field, the service area restriction field indicating whether the at least one service is allowed for the WD (22) in the non-allowed area.

10. The method of any one of Claims 6-9, wherein the network node (16) is one of an access and mobility function, AMF, node and a unified data management, UDM, node.

11. The method of any one of Claims 6-10, wherein the non-allowed area is a service area in which the WD (22) is not allowed to initiate a service request, a control plane service request and/or a session management, SM, signalling to obtain user services from a network associated with the network node (16).

12. The method of any one of Claims 6-11, wherein providing support for the WD (22) for the at least one service in the non-allowed area when the at least one of the subscription data and the operator policy indicates that the at least one service is allowed in the non-allowed area; otherwise, restricting the WD (22) from using the at least one service in the non-allowed area.

13. A wireless device, WD (22), configured to communicate with a network node (16), the WD (22) comprising processing circuitry (46) configured to cause the WD (22) to perform any one or more of the methods of Claims 1-5.

14. A network node (16), the network node (16) comprising processing circuitry (34) configured to cause the network node (16) to perform any one or more of the methods of Claims 6-12.

15. A computer readable storage medium (50) comprising computer instructions executable by at least one processor (48) to perform any one or more of the methods of claims 1-5, or claims 6-12.

## Patentansprüche

1. Verfahren, das in einer drahtlosen Vorrichtung, WD, (22) implementiert wird, wobei das Verfahren Folgendes umfasst:
Bestimmen (S108), dass die WD (22) dienstbereichsbeschränkt ist, wenn die WD (22) in einem Bereich ist, der gemäß Abonnementdaten, die mit der WD (22) assoziiert sind, als nicht zulässiger Bereich definiert ist,
Operieren (S110) in dem nicht zulässigen Bereich unter Verwendung mindestens eines Dienstes, der in dem nicht zulässigen Bereich teilweise basierend auf mindestens einem von den Abonnementdaten, die mit der WD (22) assoziiert sind, und einer Betreiberrichtlinie dienstbereichsbeschränkt ist,
wobei das Verfahren ferner Folgendes umfasst:
Erhalten von Informationen, die angeben, ob der mindestens eine Dienst für die WD (22) in dem nicht zulässigen Bereich zulässig ist.

2. Verfahren nach Anspruch 1, wobei:
- der mindestens eine Dienst kein regulatorisch priorisierter Dienst ist; oder
- der mindestens eine Dienst mindestens einen von einem Kurznachrichtendienst, SMS, über Non-Access-Stratum, einem Standortdienst oder einem Ausnahmemeldedienst umfasst.

3. Verfahren nach Anspruch 1 oder 2, wobei die Informationen in mindestens einer von einer Nudm_SubscriberDataManagement-Dienstnachricht und einer Namf_Communication _UEContextTransfer-Dienstnachricht umfasst sind.

4. Verfahren nach Anspruch 3, wobei:
- die Informationen in einem Registrierungsbereichsfeld umfasst sind, wobei das Registrierungsbereichsfeld angibt, ob der mindestens eine Dienst für die WD (22) in dem nicht zulässigen Bereich zulässig ist; oder
- die Informationen in einem Dienstbereichsbeschränkungsfeld umfasst sind, wobei das Dienstbereichsbeschränkungsfeld angibt, ob der mindestens eine Dienst für die WD (22) in dem nicht zulässigen Bereich zulässig ist.

5. Verfahren nach einem der Ansprüche 1-4, wobei:
- der nicht zulässige Bereich ein Dienstbereich ist, in dem es der WD (22) nicht erlaubt ist, eine Dienstanforderung, eine Steuerebenen-Dienstanforderung und/oder eine Sitzungsverwaltungssignalisierung, SM-Signalisierung, zu initiieren, um Benutzerdienste von einem Netzwerk zu erhalten, das mit einem Netzwerkknoten (16) assoziiert ist; und/oder
- in dem nicht zulässigen Bereich unter Verwendung des mindestens einen Dienstes operiert wird, wenn das mindestens eine von den Abonnementdaten und der Betreiberrichtlinie angibt, dass der mindestens eine Dienst in dem nichtzulässigen Bereich zulässig ist; andernfalls in dem nicht zulässigen Bereich ohne Verwenden des mindestens einen Dienstes operiert wird.

6. Verfahren, das in einem Netzwerkknoten (16) implementiert wird, wobei das Verfahren Folgendes umfasst:
Bestimmen (S104), dass eine drahtlose Vorrichtung, WD, (22) dienstbereichsbeschränkt ist, wenn die WD (22) in einem Bereich ist, der basierend auf Abonnementdaten, die mit der WD (22) assoziiert sind, als nicht zulässiger Bereich definiert ist; und
Bereitstellen (S106) von Unterstützung für die WD (22) für mindestens einen Dienst, der in dem nicht zulässigen Bereich teilweise basierend auf mindestens einem von den Abonnementdaten, die mit der WD (22) assoziiert sind, und einer Betreiberrichtlinie dienstbereichsbeschränkt ist,
wobei das Bereitstellen der Unterstützung ferner Folgendes umfasst:
Erhalten und/oder Senden einer Nachricht, die angibt, dass der mindestens eine Dienst, der dienstbereichsbeschränkt ist, für die WD (22) in dem nicht zulässigen Bereich zulässig ist.

7. Verfahren nach Anspruch 6, wobei:
- der mindestens eine Dienst kein regulatorisch priorisierter Dienst ist; und/oder
- der mindestens eine Dienst mindestens einen von einem Kurznachrichtendienst, SMS, über Non-Access-Stratum, einem Standortdienst oder einem Ausnahmemeldedienst umfasst.

8. Verfahren nach Anspruch 6 oder 7, wobei die Nachricht eine Namf_Communication_UEContextTransfer-Dienstnachricht ist; und optional
wobei die Nachricht ein Registrierungsbereichsfeld umfasst, wobei das Registrierungsbereichsfeld angibt, ob der mindestens eine Dienst für die WD (22) in dem nicht zulässigen Bereich zulässig ist.

9. Verfahren nach Anspruch 6 oder 7, wobei die Nachricht eine Nudm_SubscriberDataManagement-Dienstnachricht ist; und optional
wobei die Nachricht ein Dienstbereichsbeschränkungsfeld umfasst, wobei das Dienstbereichsbeschränkungsfeld angibt, ob der mindestens eine Dienst für die WD (22) in dem nicht zulässigen Bereich zulässig ist.

10. Verfahren nach einem der Ansprüche 6-9, wobei der Netzwerkknoten (16) einer von einem Knoten mit Zugangs- und Mobilitätsverwaltungsfunktion, AMF, oder einem Knoten für einheitliche Datenverwaltung, UDM, ist.

11. Verfahren nach einem der Ansprüche 6-10, wobei der nicht zulässige Bereich ein Dienstbereich ist, in dem es der WD (22) nicht erlaubt ist, eine Dienstanforderung, eine Steuerebenen-Dienstanforderung und/oder eine Sitzungsverwaltungssignalisierung, SM-Signalisierung, zu initiieren, um Benutzerdienste von einem Netzwerk zu erhalten, das mit dem Netzwerkknoten (16) assoziiert ist.

12. Verfahren nach einem der Ansprüche 6-11, wobei Unterstützung für die WD (22) für den mindestens einen Dienst in dem nicht zulässigen Bereich bereitgestellt wird, wenn das mindestens eine von den Abonnementdaten und der Betreiberrichtlinie angibt, dass der mindestens eine Dienst in dem nicht zulässigen Bereich zulässig ist; andernfalls die WD (22) davon abgehalten wird, den mindestens einen Dienst in dem nicht zulässigen Bereich zu verwenden.

13. Drahtlose Vorrichtung, WD, (22), konfiguriert zum Kommunizieren mit einem Netzwerkknoten (16), wobei die WD (22) Verarbeitungsschaltungsanordnung (46) umfasst, die dafür konfiguriert ist, die WD (22) zum Durchführen eines oder mehrerer der Verfahren nach Anspruch 1-5 zu veranlassen.

14. Netzwerkknoten (16), wobei der Netzwerkknoten (16) Verarbeitungsschaltungsanordnung (34) umfasst, die dafür konfiguriert ist, den Netzwerknoten (16) zum Durchführen eines oder mehrerer der Verfahren nach Anspruch 6-12 zu veranlassen.

15. Computerlesbares Speichermedium (50) umfassend Computeranweisungen, die von mindestens einem Prozessor (48) ausgeführt werden können, um eines oder mehrere der Verfahren nach Anspruch 1-5 oder 6-12 durchzuführen.

## Revendications

1. Procédé mis en œuvre dans un dispositif sans fil, WD (22), le procédé comprenant :
la détermination (S108) que le WD (22) est à restriction de zone de service lorsque le WD (22) se trouve dans une zone définie en tant que zone non autorisée selon des données d'abonnement associées au WD (22) ; et
le fonctionnement (S110) dans la zone non autorisée en utilisant au moins un service qui est à restriction de zone de service dans la zone non autorisée sur la base au moins en partie d'au moins l'une parmi les données d'abonnement associées au WD (22) et une politique d'opérateur,
dans lequel le procédé comprend en outre :
l'obtention d'informations indiquant si l'au moins un service est ou non autorisé pour le WD (22) dans la zone non autorisée.

2. Procédé selon la revendication 1, dans lequel :
- l'au moins un service n'est pas un service de priorité réglementaire ; ou
- l'au moins un service inclut au moins l'un parmi un service de messages courts, SMS, sur une strate sans accès, un service de localisation et un service de rapport d'exception.

3. Procédé selon la revendication 1 ou 2, dans lequel les informations sont comprises dans au moins l'un parmi un message de service Nudm_SubscriberDataManagement et un message de service Namf_Communication_UEContextTransfer.

4. Procédé selon la revendication 3, dans lequel :
- les informations sont incluses dans un champ de zone d'enregistrement, le champ de zone d'enregistrement indiquant si l'au moins un service est ou non autorisé pour le WD (22) dans la zone non autorisée ; ou
- les informations sont incluses dans un champ de restriction de zone de service, le champ de restriction de zone de service indiquant si l'au moins un service est ou non autorisé pour le WD (22) dans la zone non autorisée.

5. Procédé selon l'une quelconque des revendications 1 à 4, dans lequel :
- la zone non autorisée est une zone de service dans laquelle le WD (22) n'est pas autorisé à initier une demande de service, une demande de service de plan de commande et/ou une signalisation de gestion de session, SM, pour obtenir des services d'utilisateur depuis un réseau associé à un nœud de réseau (16) ; et/ou
- le fonctionnement dans la zone non autorisée en utilisant l'au moins un service lorsque l'au moins une parmi les données d'abonnement et la politique d'opérateur indique que l'au moins un service est autorisé dans la zone non autorisée ; sinon, le fonctionnement dans la zone autorisée sans utiliser l'au moins un service.

6. Procédé mis en œuvre dans un nœud de réseau (16), le procédé comprenant :
la détermination (S104) qu'un dispositif sans fil, WD (22), est à restriction de zone de service lorsque le WD (22) se trouve dans une zone définie en tant que zone non autorisée selon des données d'abonnement associées au WD (22) ; et
la fourniture (S106) d'une prise en charge pour le WD (22) pour au moins un service qui est à restriction de zone de service dans la zone non autorisée sur la base au moins en partie d'au moins l'une parmi les données d'abonnement associées au WD (22) et une politique d'opérateur,
dans lequel la fourniture de la prise en charge comprend en outre :
l'obtention et/ou l'envoi d'un message indiquant que l'au moins un service qui est à restriction de zone de service est autorisé pour le WD (22) dans la zone non autorisée.

7. Procédé selon la revendication 6, dans lequel :
- l'au moins un service n'est pas un service de priorité réglementaire ; et/ou
- l'au moins un service inclut au moins l'un parmi un service de messages courts, SMS, sur une strate sans accès, un service de localisation et un service de rapport d'exception.

8. Procédé selon la revendication 6 ou 7, dans lequel le message est un message de service Namf_Communication_UEContextTransfer ; et facultativement
dans lequel le message inclut un champ de zone d'enregistrement, le champ de zone d'enregistrement indiquant si l'au moins un service est ou non autorisé pour le WD (22) dans la zone non autorisée.

9. Procédé selon la revendication 6 ou 7, dans lequel le message est un message de service Nudm_SubscriberDataManagement ; et facultativement
dans lequel le message inclut un champ de restriction de zone de service, le champ de restriction de zone de service indiquant si l'au moins un service est ou non autorisé pour le WD (22) dans la zone non autorisée.

10. Procédé selon l'une quelconque des revendications 6 à 9, dans lequel le nœud de réseau (16) est l'un parmi un nœud de fonction d'accès et de mobilité, AMF, et un nœud de gestion de données unifiée, UDM.

11. Procédé selon l'une quelconque des revendications 6 à 10, dans lequel la zone non autorisée est une zone de service dans laquelle le WD (22) n'est pas autorisé à initier une demande de service, une demande de service de plan de commande et/ou une signalisation de gestion de session, SM, pour obtenir des services d'utilisateur depuis un réseau associé au nœud de réseau (16).

12. Procédé selon l'une quelconque des revendications 6 à 11, dans lequel la fourniture d'une prise en charge pour le WD (22) pour l'au moins un service dans la zone non autorisée lorsque l'au moins une parmi les données d'abonnement et la politique d'opérateur indique que l'au moins un service est autorisé dans la zone non autorisée ; sinon, l'interdiction au WD (22) d'utiliser l'au moins un service dans la zone non autorisée.

13. Dispositif sans fil, WD (22), configuré pour communiquer avec un nœud de réseau (16), le WD (22) comprenant une circuiterie de traitement (46) configurée pour amener le WD (22) à réaliser l'un quelconque ou plusieurs des procédés selon les revendications 1 à 5.

14. Nœud de réseau (16), le nœud de réseau (16) comprenant une circuiterie de traitement (34) configurée pour amener le nœud de réseau (16) à réaliser l'un quelconque ou plusieurs des procédés selon les revendications 6 à 12.

15. Support de stockage lisible par ordinateur (50) comprenant des instructions d'ordinateur exécutables par au moins un processeur (48) pour réaliser l'un quelconque ou plusieurs des procédés selon les revendications 1 à 5 ou les revendications 6 à 12.
